# EUROPÄISCHE PATENTSCHRIFT

(11) **EP 4 172 609 B1**
(45) Veröffentlichungstag und Bekanntmachung des Hinweises auf die Patenterteilung: **07.08.2024**
(21) Anmeldenummer: 21733924.1
(22) Anmeldetag: 14.06.2021
(51) Int. Cl.: G01N 27/407, G01N 27/417

(54) **SENSORELEMENT MIT VIER KONTAKTFLÄCHEN UND DREI DURCHKONTAKTIERUNGEN**
SENSOR ELEMENT HAVING FOUR CONTACT SURFACES AND THREE VIAS
ÉLÉMENT CAPTEUR AYANT QUATRE SURFACES DE CONTACT ET TROIS TROUS D'INTERCONNEXION

(30) Priorität: 25.06.2020 DE 102020207877
(43) Veröffentlichungstag der Anmeldung: 03.05.2023
(73) Patentinhaber: Robert Bosch GmbH, 70442 Stuttgart (DE)
(72) Erfinder: HEYER, Martin, 70469 Stuttgart (DE); HANSELMANN, Annette, 70192 Stuttgart (DE); ECKARDT, Martin, 70176 Stuttgart (DE); RENTROP, Tobias, 70197 Stuttgart (DE); KRAUS, Thomas, 96155 Buttenheim (DE); PASTUSZKA-LUDE, Thomas, 70469 Stuttgart (DE); ARNETH, Ulrich, 96135 Stegaurach (DE); BIGGE, Andreas, 96135 Stegaurach (DE)
(86) Internationale Anmeldenummer: PCT/EP2021/065892
(87) Internationale Veröffentlichungsnummer: WO 2021/259685

(56) Entgegenhaltungen:
- DE-A1- 102006 055 797
- DE-A1- 102019 103 323
- DE-A1- 102019 219 552
- US-A1- 2004 069 630
- US-A1- 2013 019 655
- US-A1- 2016 153 929

## Beschreibung

### Stand der Technik

Aus dem Stand der Technik, beispielsweise aus der DE 10 2018 206 966 A1 oder aus der DE 10 2006 055 797 A1, sind bereits keramische Sensorelemente für Lambdasonden bekannt, die die Merkmale des Oberbegriffs des Anspruchs 1 aufweisen. Den genannten Schriften lag auch bereits das Bemühen zugrunde, die Belastbarkeit des Sensorelements gegenüber mechanischen Spannungen zu erhöhen.

### Vorteile der Erfindung

Die vorliegende Erfindung zielt weiterhin darauf ab, die Belastbarkeit des Sensorelements gegenüber mechanischen Spannungen zu erhöhen.

Dabei haben die Erfinder zunächst erkannt, dass bei einem keramischen Sensorelement gemäß dem Oberbegriff des Anspruch 1 eine gewisse mechanische Schwächung in dem dem Abgas abgewandten Endbereich des Sensorelements bereits grundsätzlich aus der Vorsehung der ersten, zweiten und dritten Durchkontaktierung resultiert.

Die Erfinder haben ferner erkannt, dass die mechanische Schwächung weiterhin resultiert, wenn die Durchkontaktierungen eng beieinander liegen. In diesem Fall ist die individuelle Schwächung durch jede der Durchkontaktierungen in der Summe weiter erhöht.

Die Erfinder haben ferner erkannt, dass die mechanische Schwächung weiterhin resultiert, wenn eine oder mehrere Durchkontaktierungen in Querrichtung nah an einer Außenkante des Sensorelements liegen. In diesem Fall leistet das Sensorelement einer mechanischen Spannung, die von der Außenkante des Sensorelements ausgeht, nur vermindert Widerstand.

Die Erfinder haben ferner erkannt, dass die mechanische Schwächung weiterhin resultiert, wenn eine Durchkontaktierung vergleichsweise weit von dem abgasabgewandten axialen Ende des Sensorelements beabstandet ist. In diesem Fall wird nämlich ausgehend von Kräften, die an dem abgasabgewandten axialen Ende des Sensorelements in Schichtrichtung einwirken, eine große Hebelwirkung in dem Bereich der Durchkontaktierung wirksam, woraus dort hohe mechanische Spannungen resultieren.

Die Erfinder haben auch erkannt, dass eine weitere grundsätzliche mechanische Schwächung von Isolationsschichten ausgehen kann, die zwischen den Festelektrolytschichten angeordnet ist, einerseits da diese Schichten den homogenen Schichtaufbau durch Festelektrolytschichten bereits grundsätzlich unterbrechen. Hinzu kommt, dass das Einfügen der Isolationsschichten aufgrund des sich unterscheidenden Sinterverhaltens der Isolationsschichten und der Festelektrolytschichten zu mechanischen Spannungen führen.

Die Erfinder haben erkannt, dass dies besonders der Fall ist, wenn die Isolationsschichten in Querrichtung oder in axialer Richtung bis nah an die Außenkanten des Sensorelements reichen.

Die Erfinder haben sodann verschiedene Möglichkeiten gefunden, wie diese mechanischen Schwächungen insgesamt reduziert bzw. minimiert werden können. Dabei sind die Möglichkeiten jede für sich und besonders in ihrer Kombination wirksam.

Demgemäß ist vorgesehen, dass bei einem Sensorelement gemäß dem Oberbegriff des Anspruchs 1 die zweite Durchkontaktierung und die dritte Durchkontaktierung in axialer Richtung beide abgasseitig der ersten Durchkontaktierung angeordnet sind und dass die erste Durchkontaktierung in Querrichtung zwischen der zweiten Durchkontaktierung und der dritten Durchkontaktierung angeordnet ist. Im Vergleich zu der aus dem Stand der Technik bekannten Anordnung ist es auf diese Weise möglich, den Abstand der Durchkontaktierungen zueinander zu erhöhen, ohne dass die Durchkontaktierungen übermäßig weit von dem dem Abgas abgewandten axialen Ende des Sensorelements weg angeordnet werden müssen. Überdies ist in Querrichtung der Abstand der ersten Durchkontaktierung von der Außenkante des Sensorelements erhöht.

Dies gilt umso mehr, wenn die zweite Durchkontaktierung und die dritte Durchkontaktierung auf gleicher axialer Höhe angeordnet sind und wenn die erste Durchkontaktierung in Querrichtung mittig zwischen der zweiten Durchkontaktierung und der dritten Durchkontaktierung angeordnet ist, sodass die erste, zweite und dritte Durchkontaktierung auf den Eckpunkten eines gleichschenkligen Dreiecks liegen, besonders, wenn in dem gleichschenkligen Dreieck der Winkel, der der Basis gegenüberliegt, nicht größer als 90° ist und nicht kleiner als 30° ist. Es kann sich als beispielsweise bevorzugt um ein gleichseitiges Dreieck handeln.

Im Rahmen der Anmeldung kann bei der Position einer Durchkontaktierung und daraus resultierend bei Lageangaben von Durchkontaktierungen untereinander, von der Position des Flächenschwerpunkts der Durchkontaktierung in Aufsicht auf eine Großfläche des Sensorelements ausgegangen werden. Bei Durchkontaktierungen, die in Aufsicht auf eine Großfläche des Sensorelements kreisrund sind, wäre diese Position also der Mittelpunkt des betreffenden Kreises.

Zusätzlich oder alternativ kann bei einem Sensorelement gemäß dem Oberbegriff des Anspruch 1 vorgesehen sein, dass die erste Durchkontaktierung, die zweite Durchkontaktierung und die dritte Durchkontaktierung vollständig in dem vom Abgas abgewandten Endbereich des Sensorelements angeordnet sind, wobei sich der vom Abgas abgewandte Endbereich des Sensorelements in die axiale Richtung weniger erstreckt als ein Fünftel der Erstreckung des Sensorelements in die axiale Richtung. Aufgrund der verminderten Hebelwirkung bewirken dann Kräfte, die an dem dem Abgas abgewandten axialen Ende des Sensorelements in Schichtrichtung einwirken, im Bereich der Durchkontaktierung lediglich verminderte Spannungen.

Es kann vorgesehen sein, dass die erste Durchkontaktierung als erstes Loch in der ersten Festelektrolytschicht mit einem in dem ersten Loch angeordneten ersten leitfähigen Material ausgebildet ist und die zweite Durchkontaktierung als zweites Loch in der zweiten Festelektrolytschicht mit einem in dem zweiten Loch angeordneten zweiten leitfähigen Material ausgebildet ist und die dritte Durchkontaktierung als drittes Loch in der zweiten Festelektrolytschicht mit einem in dem dritten Loch angeordneten dritten leitfähigen Material ausgebildet ist und das erste Loch einen ersten Durchmesser aufweist und das zweite Loch einen zweiten Durchmesser aufweist und das dritte Loch einen dritten Durchmesser aufweist.

Die Löcher können beispielsweise in Aufsicht auf eine Großfläche des Sensorelements kreisrund sein, sodass die Durchmesser der Löcher die Durchmesser der betreffenden Kreise sind. Die drei hierbei in Rede stehenden Durchmesser können zum Beispiel gleich groß sein.

Es kann vorgesehen sein, dass in Aufsicht auf die Großflächen des Sensorelements der Flächenschwerpunkt des zweiten Lochs von dem Flächenschwerpunkt des dritten Lochs um ein Abstandsmaß a beabstandet ist.

Ist bei einem Sensorelement mit den Merkmalen des Oberbegriffs des Anspruch 1 insofern vorgesehen, dass das Abstandsmaß a kleiner ist als die Summe des zweiten Durchmessers und des dritten Durchmessers, und/oder vorgesehen, dass das halbe Abstandsmaß kleiner ist als der Abstand des Flächenschwerpunkt des zweiten Lochs von einer in Querrichtung nächstgelegenen Außenkante des Sensorelements. und/oder vorgesehen, dass das halbe Abstandsmaß kleiner ist als der Abstand des Flächenschwerpunkt des dritten Lochs von der in Querrichtung nächstgelegenen Außenkante des Sensorelements, so ist der Abstand der zweiten und der dritten Durchkontaktierung zueinander und relativ zu einem Abstand der Durchkontaktierungen zu einer Außenkante des Sensorelements und zu dem Lochdurchmessern insgesamt in einem ausgewogenen und insofern mechanisch optimierten Bereich.

Ist bei einem Sensorelement mit den Merkmalen des Oberbegriffs des Anspruch 1 insofern vorgesehen, dass der Flächenschwerpunkt des ersten Lochs in axialer Richtung von der ersten, zweiten, dritten und/oder vierten Kontaktfläche nicht mehr beabstandet ist, als der halbe Durchmesser des ersten Lochs, so bedeutet dies, dass das erste Loch in axialer Richtung sehr nah an den Kontaktflächen und somit nah an dem von dem Abgas abgewandten Ende des Sensorelements angeordnet ist. Aufgrund der verminderten Hebelwirkung bewirken dann Kräfte, die an dem dem Abgas abgewandten axialen Ende des Sensorelements in Schichtrichtung einwirken, im Bereich der ersten Durchkontaktierung lediglich verminderte Spannungen.

Zusätzlich oder alternativ kann vorgesehen sein, dass die erste Kontaktfläche in Aufsicht auf die Großfläche des Sensorelements zur ersten Durchkontaktierung hin eine konkave Außenkontur aufweist. Die erste Durchkontaktierung kann dann besonders weit zu dem vom Abgas abgewandten Ende des Sensorelements verschoben werden, ohne mit der ersten Kontaktfläche in Berührung zu kommen, besonders, wenn vorgesehen ist, dass die konkave Außenkontur einen Radius aufweist, der gleich dem halben Durchmesser des ersten Lochs ist oder sich von dem halben Durchmesser des ersten Lochs nicht mehr als 50% unterscheidet. Zusätzlich oder alternativ können die erste Durchkontaktierung und die konkave Außenkontur der ersten Kontaktfläche auch konzentrisch zueinander sein.

Zusätzlich oder alternativ kann bei einem Sensorelement gemäß dem Oberbegriff des Anspruchs 1 vorgesehen sein, dass zwischen der ersten und der zweiten Festelektrolytschicht eine Isolationsschicht angeordnet ist oder mehrere Isolationsschichten angeordnet sind, sodass ein erster elektrischer Verbund, der die zweite Elektrode, die zweite Leiterbahn und die erste Durchkontaktierung umfasst, durch die Isolationsschicht/ Isolationsschichten elektrisch isoliert ist gegenüber einem zweiten elektrischen Verbund, der die Widerstandsheizerbahn, die dritte Leiterbahn, die vierte Leiterbahn, die zweite Durchkontaktierung und die dritte Durchkontaktierung umfasst.

Hierbei kann vorgesehen sein, dass die Isolationsschicht/ die Isolationsschichten in Aufsicht auf die Großflächen des Sensorelements lediglich soweit erstreckt ist/ sind, wie es notwendig ist, um den ersten elektrischen Verbund gegenüber dem zweiten elektrischen Verbund elektrisch zu isolieren und im Übrigen von einem Dichtrahmen/ jeweils einem Dichtrahmen aus Festelektrolytmaterial umgeben ist/ sind. "Lediglich" kann hierbei insbesondere voraussetzen, dass die Isolationsschicht/ Isolationsschichten fertigungsbedingt in Querrichtung und/oder in axialer Richtung über die insgesamt zu isolierende Struktur hinausgeht, beispielsweise um bis zu 250 µm und/oder um bis zu 5% der Erstreckung des Sensorelements in Querrichtung - aber nicht weiter als dies - über die zu isolierende Struktur hinausgeht. Die mechanische Schwächung des Sensorelements ist dann auf ein Mindestmaß reduziert, das für die gewünschte elektrische Isolation unvermeidlich ist.

Eine vergleichbare technische Wirkung resultiert aus der Maßnahme, dass die Erstreckung des Dichtrahmens/ aller Dichtrahmen in Querrichtung, gemessen von der zugehörigen Isolationsschicht bis zur Außenkante des Sensorelements in dem vom Abgas abgewandten Endbereich des Sensorelements stets größer ist als 1/10 der Erstreckung des Sensorelements in Querrichtung.

Bei dem Festelektrolytmaterial kann es sich ebenso wie bei dem Material der Festelektrolytschichten um YSZ oder dergleichen handeln.

Vorteilhafterweise können zugleich eine erste Isolationsschicht und eine zweite Isolationsschicht vorgesehen sein, wobei die erste Isolationsschicht in Schichtrichtung von der zweiten Isolationsschicht aus gesehen auf der zur ersten Festelektrolytschicht und zum ersten elektrischen Verbund weisenden Seite liegt und die zweite Isolationsschicht in Schichtrichtung von der ersten Isolationsschicht aus gesehen auf der zur zweiten Festelektrolytschicht und zum zweiten elektrischen Verbund hin weisenden Seite liegt.

Dabei kann vorgesehen sein, dass die erste Isolationsschicht in Aufsicht auf die Großfläche des Sensorelements die zweite Leiterbahn sowie die erste, die zweite und die dritte Durchkontaktierung überdeckt, wobei die erste Isolationsschicht hierzu auf der axialen Höhe der zweiten und der dritten Durchkontaktierung in Querrichtung verbreitert ist, und/oder dass die zweite Isolationsschicht in Aufsicht auf die Großfläche des Sensorelements den zweiten elektrischen Verbund umhüllt und zusätzlich die erste Durchkontaktierung überdeckt, indem die zweite Isolationsschicht auf der axialen Höhe der ersten Durchkontaktierung in Querrichtung verjüngt ist. Die gewünschte elektrische Isolationswirkung resultiert in diesen Fällen bereits bei einer minimalen mechanischen Schwächung des Sensorelements, also unter Beibehaltung einer optimierten mechanischen Stabilität des Sensorelements.

Zeichnung
- Figur 1: zeigt schematisch die Umrisse eines keramischen Sensorelements.
- Figur 2: zeigt Schichtebenen des keramischen Sensorelements aus Figur 1.

### Beschreibung der Ausführungsbeispiele

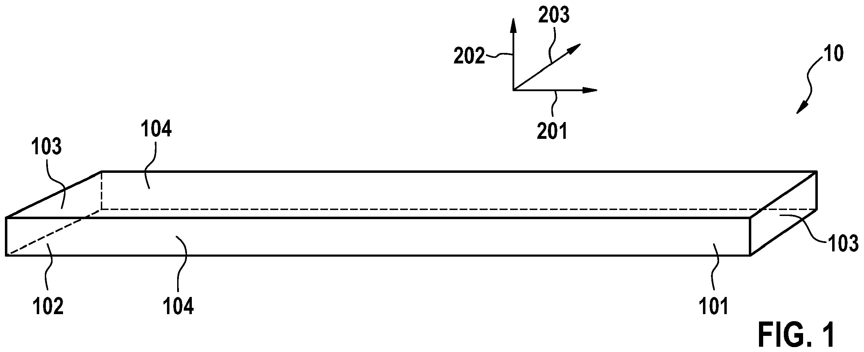

Figur 1 zeigt schematisch die Grundform eines planaren keramischen Sensorelements 10. Es weist einen dem Abgas zugewandten axialen Endbereich 101 auf und es weist axial gegenüberliegend einen dem Abgas abgewandten axialen Endbereich 102 auf. Es weist eine quaderförmige Grundform auf mit zwei kleinsten Seitenflächen 103, zwei größten Seitenflächen 104 (auch: Großflächen 104), wobei die kleinsten Seitenflächen 103 senkrecht zur axialen Richtung 201 ausgerichtet sind, wobei die größten Seitenflächen 104 senkrecht zu einer Schichtrichtung 202 ausgerichtet sind, wobei eine Querrichtung 203 senkrecht zur axialen Richtung 201 und senkrecht zur Schichtrichtung 202 orientiert ist. Die Erstreckung des Sensorelements in Querrichtung 203 beträgt beispielsweise 5mm.

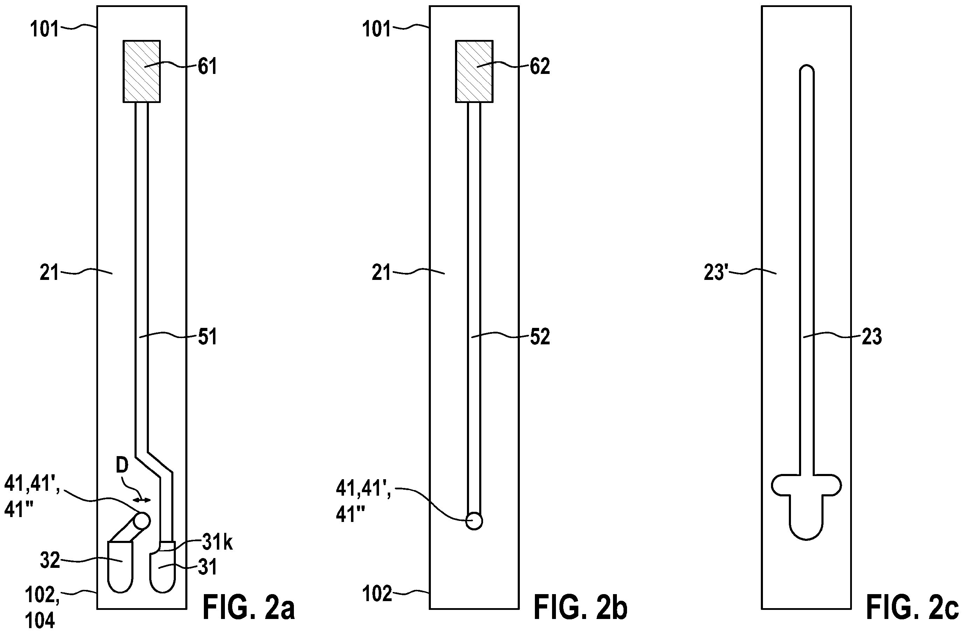

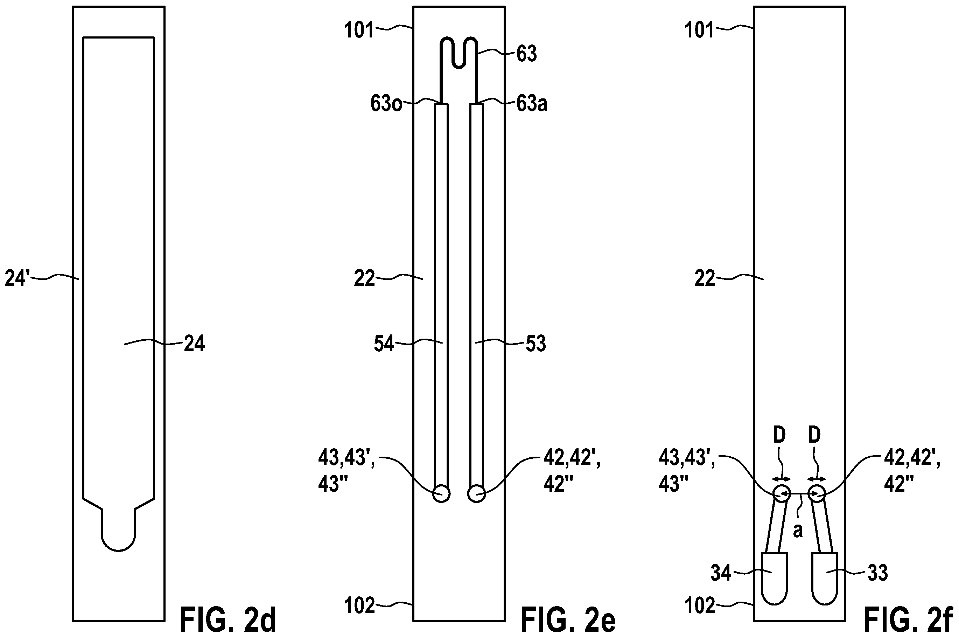

In der Figur 2 sind in den Teilen a - f einzelne Sichten, aus denen das in der Figur 1 gezeigte Sensorelement 10 aufgebaut ist, dargestellt. Die Darstellung ist stets in Aufsicht auf die größten Seitenflächen 104, entsprechend einer Blickrichtung in Figur 1 von oben nach unten.

Im Teil a der Figur 2 ist die Oberseite einer in Figur 1 zuoberst angeordneten, ersten Festelektrolytschicht 21 dargestellt. In dem dem Abgas abgewandten Endbereich 102 sind auf der Oberseite der ersten Festelektrolytschicht 21 eine erste Kontaktfläche 31 und eine zweite Kontaktfläche 32 in Querrichtung nebeneinander auf gleicher axialer Höhe angeordnet.

Die erste Kontaktfläche 31 ist auf der Oberseite der ersten Festelektrolytschicht 21 über eine erste Leiterbahn 51 mit einer ersten Elektrode 61 verbunden, die in dem dem Abgas zugewandten Endbereich 101 des Sensorelements 10 angeordnet ist.

Die zweite Kontaktfläche 32 ist mit einer ersten Durchkontaktierung 41 elektrisch leitend verbunden, die mit geringem axialen Abstand zur ersten und zweiten Kontaktfläche 31, 32, in Querrichtung 203 mittig zu dem Sensorelement 10 angeordnet ist. Die erste Durchkontaktierung 41 ist beispielsweise ein zylindrisches erstes Loch 41' durch die erste Festelektrolytschicht 21, das in seinem Inneren - ggf. zur ersten Festelektrolytschicht 21 hin elektrisch isoliert - ein erstes leitfähiges Material 41" aufweist. Der Durchmesser D des ersten Lochs beträgt beispielsweise 1 mm.

Die erste Durchkontaktierung 41 ist beispielsweise in axialer Richtung 201 5 mm von dem dem Abgas abgewandten Ende des Sensorelements 10 entfernt.

Eine der ersten Durchkontaktierung 41 zugewandte Ecke der ersten Kontaktfläche 31 ist als runde Ausnehmung gestaltet, sodass die erste Kontaktfläche 31 hier eine konkave Außenkontur 31k aufweist. Die konkave Außenkontur 31k ist als Kreisbogen gestaltet, im Beispiel ein Bogen mit dem Krümmungsradius 0,5mm um 90°. Ein elektrischer Kurzschluss zwischen der ersten Durchkontaktierung 41 und der ersten Kontaktfläche 31 ist somit auch bei fertigungsbedingten Schwankungen der genauen Anordnung der Bauelemente ausgeschlossen.

Im Teil b der Figur 2 ist die Unterseite der in Figur 1 zuoberst angeordneten, ersten Festelektrolytschicht 21 dargestellt. In dieser Schichtebene mündet die von der Oberseite der ersten Festelektrolytschicht 21 ausgehende Durchkontaktierung 41. Sie ist auf dieser Unterseite elektrisch leitend über die zweite Leiterbahn 52 mit der zweiten Elektrode 62 verbunden, die in dem dem Abgas zugewandten Endbereich 101 des Sensorelements 10 in dessen Innerem angeordnet ist.

Die dem Abgas ausgesetzte erste Elektrode 61 bildet zusammen mit der ersten Festelektrolytschicht 21 und der dem Abgas nicht ausgesetzten zweiten Elektrode 62 eine elektrochemische Nernstzelle, mit der - entsprechende Beheizung vorausgesetzt, siehe unten - auf Basis einer sich an ihr ausbildenden Nernstspannung, die zwischen der ersten und der zweiten Kontaktfläche 31, 32 messbar ist, bestimmbar ist, ob das Abgas aus einer Verbrennung mit Sauerstoffüberschuss resultiert ("mager") oder aus einer Verbrennung mit Kraftstoffüberschuss resultiert ("fett") oder ob es aus einer Verbrennung resultiert, bei der Sauerstoff und Kraftstoff im stöchiometrischen Gleichgeweicht vorliegen.

Im Teil f der Figur 2 ist die Unterseite der in Figur 1 zuunterst angeordneten, zweiten Festelektrolytschicht 22 dargestellt. Im dem dem Abgas abgewandten Endbereich 102 sind auf der Unterseite der zweiten Festelektrolytschicht 22 eine dritte Kontaktfläche 33 und eine vierte Kontaktfläche 34 in Querrichtung nebeneinander zueinander angeordnet. Die dritte Kontaktfläche 33 und die vierte Kontaktfläche 34 sind zu der ersten Kontaktfläche 31 und zu der zweiten Kontaktfläche 32 auf gleicher axialer Höhe des Sensorelements 10 angeordnet.

Die dritte Kontaktfläche 33 ist mit einer zweiten Durchkontaktierung 42 elektrisch leitend verbunden, die beispielsweise mit einem axialen Abstand von 7,2 mm zu dem dem Abgas abgewandten Ende des Sensorelements 10 angeordnet ist. Die zweite Durchkontaktierung 42 ist beispielsweise in Querrichtung um 0,95 mm außermittig (im Teil f der Figur 2: rechts) angeordnet. Ihr Abstand in Querrichtung 203 zur Außenkante des Sensorelements 10 beträgt also 1,55 mm.

Dazu wiederum symmetrisch ist die vierte Kontaktfläche 34 mit einer dritten Durchkontaktierung 43 elektrisch leitend verbunden, die auf gleicher axialer Höhe und in Querrichtung gleich außermittig (allerdings links statt rechts) wie die zweite Durchkontaktierung 42 angeordnet ist.

Die zweite und die dritte Durchkontaktierung 42, 43 sind beispielsweise zylindrische zweite und dritte Löcher 42', 43' durch die zweite Festelektrolytschicht 22, die in ihrem Inneren - ggf. zur zweiten Festelektrolytschicht 22 hin elektrisch isoliert - ein zweites und ein drittes leitfähiges Material 42", 43" aufweisen. Der Durchmesser D dieser Löcher beträgt beispielsweise in beiden Fällen 1mm.

Im Teil e der Figur 2 ist die Oberseite der in Figur 1 zuunterst angeordneten, zweiten Festelektrolytschicht 22 dargestellt. In dieser Schichtebene münden die von der Unterseite der zweiten Festelektrolytschicht 22 ausgehenden Durchkontaktierungen 42, 43. Sie sind auf dieser Oberseite elektrisch leitend über die dritte Leiterbahn 53 und die vierte Leiterbahn 54 mit den beiden Enden 63a, 63o einer Widerstandheizerbahn 63 verbunden, die in dem dem Abgas zugewandten Endbereich 101 des Sensorelements 10 angeordnet ist.

Durch Anlegen einer elektrischen Spannung zwischen die dritte und die vierte Kontaktfläche 33, 34 erhitzt sich die Widerstandsleiterbahn 63, sodass die Nernstzelle ihre für die Messfunktion des Sensorelements 10 erforderliche Betriebstemperatur annimmt.

Um ein unerwünschtes elektrisches Übersprechen zwischen der Heizfunktion und der Messfunktion des Sensorelements 10 zu verhindern, sind zwischen der ersten Festelektroytschicht 21 und der zweiten Festelektrolytschicht 22 eine erste Isolationsschicht 23 und eine zweite Isolationsschicht 24 angeordnet. Dabei kommt die erste Isolationsschicht 23 auf der Unterseite der ersten Festelektrolytschicht 21 zu liegen und die zweite Festelektrolytschicht kommt auf der Oberseite der zweiten Festelektrolytschicht 22 zu liegen.

Die Isolationsschichten 23, 24 bestehen beispielsweise aus Al₂O₃ und sind in Schichtrichtung 202 beispielsweise weniger erstreckt als die Festelektrolytschichten 21, 22. Beispielsweise kann es sich bei den Isolationsschichten 23, 24 um Siebdruckschichten handeln, während die Festelektrolytschichten 21, 22 beispielsweise auf grüne keramische Folien zurückgehen.

Die erste Isolationsschicht 23 ist in dem Teil c der Figur 2 dargestellt. Die Form der ersten Isolationsschicht ist so, dass sie die zweite Leiterbahn 52 sowie die erste, die zweite und die dritte Durchkontaktierung 41, 42, 43 so gerade überdeckt, ohne dass sie dabei mehr als fertigungstechnisch erforderlich über diese Elemente lateral übersteht. Hierzu ist die erste Isolationsschicht 23 auf der axialen Höhe der zweiten und der dritten Durchkontaktierung 42, 43 in Querrichtung 203 verbreitert.

Die zweite Isolationsschicht 24 ist in dem Teil d der Figur 2 dargestellt. Die Form der zweiten Isolationsschicht 24 ist so, dass sie die Widerstandsheizerbahn 63, die dritte und die vierte Leiterbahn 53, 54, sowie die erste, die zweite und die dritte Durchkontaktierung 41, 42, 43 so gerade überdeckt, ohne dass sie dabei mehr als fertigungstechnisch erforderlich über diese Elemente lateral übersteht. Hierzu ist die zweite Isolationsschicht 24 auf der axialen Höhe der ersten Durchkontaktierung 41 in Querrichtung 203 verjüngt.

## Patentansprüche

1. Keramisches planares Sensorelement (10), beispielsweise für eine Lambdasonde, wobei das Sensorelement (10) einen dem Abgas zugewandten axialen Endbereich (101) aufweist, und axial gegenüberliegend einen dem Abgas abgewandten Endbereich (102) aufweist, wobei das Sensorelement (10) eine quaderförmige Grundform aufweist mit zwei kleinsten Seitenflächen (103), zwei größten Seitenflächen (104), wobei die kleinsten Seitenflächen (103) senkrecht zur axialen Richtung (201) ausgerichtet sind, wobei die größten Seitenflächen (104) senkrecht zu einer Schichtrichtung (202) ausgerichtet sind, wobei eine Querrichtung (203) senkrecht zur axialen Richtung (201) und senkrecht zur Schichtrichtung (202) orientiert ist, wobei das keramische Sensorelement (10) keramische Schichten (21, 22, 23, 24) aufweist, die in Schichtrichtung (202) übereinander angeordnet sind, wobei die keramischen Schichten (21, 22, 23, 24) zumindest eine erste und eine zweite Festelektrolytschicht (21, 22) umfassen, wobei das keramische Sensorelement (20) in dem dem Abgas zugewandten axialen Endbereich (101) eine dem Abgas ausgesetzte erste Elektrode (61) aufweist, wobei das keramische Sensorelement (10) in dem dem Abgas zugewandten axialen Endbereich (101) in seinem Inneren eine von dem Abgas getrennte zweite Elektrode (62) aufweist, wobei die erste Elektrode (61) mit der zweiten Elektrode (62) und mit der ersten Festelektrolytschicht (21) eine elektrochemische Zelle bildet, wobei in dem dem Abgas zugewandten axialen Endbereich (101) im Inneren des keramischen Sensorelements (10) eine elektrische Widerstandsheizerbahn (63) mit einem ersten Ende (63a) und einem zweiten Ende (63o) angeordnet ist, wobei in dem dem Abgas abgewandten axialen Endbereich (101) auf jeder der beiden größten Seitenflächen (104) jeweils genau zwei Kontaktflächen (31, 32, 33, 34) zur elektrischen Kontaktierung des Sensorelements (10) von außen angeordnet sind, wobei eine erste Kontaktfläche (31) dieser Kontaktflächen (31, 32, 33, 34) über eine erste Leiterbahn (51) mit der ersten Elektrode (61) verbunden ist, wobei eine zweite Kontaktfläche (32) dieser Kontaktflächen (31, 32, 33, 34) über eine erste Durchkontaktierung (41) durch die erste Festelektrolytschicht (21) und über eine zweite Leiterbahn (52), die im Inneren des Sensorelements (10) angeordnet ist, mit der zweiten Elektrode (62) verbunden ist, wobei eine dritte Kontaktfläche (33) dieser Kontaktflächen (31, 32, 33, 34) über eine zweite Durchkontaktierung (42) durch die zweite Festelektrolytschicht (22) und über eine dritte Leiterbahn (53), die im Inneren des Sensorelements (10) angeordnet ist, mit dem ersten Ende (63a) der Widerstandsheizerbahn (63) verbunden ist, wobei eine vierte Kontaktfläche (34) dieser Kontaktflächen (31, 32, 33, 34) über eine dritte Durchkontaktierung (43) durch die zweite Festelektrolytschicht (22) und über eine vierte Leiterbahn (54), die im Inneren des Sensorelements (10) angeordnet ist, mit dem zweiten Ende (63o) der Widerstandsheizerbahn (63) verbunden ist, **dadurch gekennzeichnet, dass** die zweite Durchkontaktierung (42) und die dritte Durchkontaktierung (43) in axialer Richtung (201) beide abgasseitig der ersten Durchkontaktierung (41) angeordnet sind und dass die erste Durchkontaktierung (41) in Querrichtung (203) zwischen der zweiten Durchkontaktierung (42) und der dritten Durchkontaktierung (43) angeordnet ist.

2. Sensorelement nach Anspruch 1, **dadurch gekennzeichnet, dass** die erste Durchkontaktierung (41), die zweite Durchkontaktierung (42) und die dritte Durchkontaktierung (43) vollständig in dem vom Abgas abgewandten Endbereich (102) des Sensorelements (10) angeordnet sind, wobei sich der vom Abgas abgewandte Endbereich (102) des Sensorelements (10) in die axiale Richtung weniger erstreckt als ein Fünftel der Erstreckung des Sensorelements (10) in die axiale Richtung (201).

3. Sensorelement nach Anspruch 1 oder 2, **dadurch gekennzeichnet, dass** die zweite Durchkontaktierung (42) und die dritte Durchkontaktierung (43) auf gleicher axialer Höhe angeordnet sind und dass die erste Durchkontaktierung (41) in Querrichtung (203) mittig zwischen der zweiten Durchkontaktierung (42) und der dritten Durchkontaktierung (43) angeordnet ist, sodass die erste, zweite und dritte Durchkontaktierung (41, 42, 43) auf den Eckpunkten eines gleichschenkligen Dreiecks liegen.

4. Sensorelement nach Anspruch 3, **dadurch gekennzeichnet, dass** in dem gleichschenkligen Dreieck der Winkel (41), der der Basis (42, 43) gegenüberliegt, nicht größer als 90° ist und nicht kleiner als 30° ist.

5. Sensorelement nach einem der vorangehenden Ansprüche, **dadurch gekennzeichnet, dass** die erste Durchkontaktierung (41) als erstes Loch (41') in der ersten Festelektrolytschicht (21) mit einem in dem ersten Loch (41') angeordneten ersten elektrisch leitfähigen Material (41") ausgebildet ist und die zweite Durchkontaktierung (42) als zweites Loch (42') in der zweiten Festelektrolytschicht (22) mit einem in dem zweiten Loch (42') angeordneten zweiten elektrisch leitfähigen Material (42") ausgebildet ist und die dritte Durchkontaktierung (43) als drittes Loch (43') in der zweiten Festelektrolytschicht (22) mit einem in dem dritten Loch (43') angeordneten dritten elektrisch leitfähigen Material (43") ausgebildet ist und das erste Loch (41') einen ersten Durchmesser (D) aufweist und das zweite Loch (42') einen zweiten Durchmesser (D) aufweist und das dritte Loch (43') einen dritten Durchmesser (D) aufweist, und in Aufsicht auf die Großflächen (204) des Sensorelements (10) der Flächenschwerpunkt des zweiten Lochs (42') von dem Flächenschwerpunkt des dritten Lochs (43') um ein Abstandsmaß (a) beabstandet ist.

6. Sensorelement nach Anspruch 5, **dadurch gekennzeichnet, dass** das Abstandsmaß (a) kleiner ist als die Summe des zweiten Durchmessers (D) und des dritten Durchmessers (D).

7. Sensorelement nach Anspruch 5 oder 6 **dadurch gekennzeichnet, dass** das halbe Abstandsmaß (a) kleiner ist als der Abstand des Flächenschwerpunkts des zweiten Lochs (42') von einer in Querrichtung nächstgelegenen Außenkante des Sensorelements (10) und dass das halbe Abstandsmaß (a) kleiner ist als der Abstand des Flächenschwerpunkts des dritten Lochs (43') von der in Querrichtung nächstgelegenen Außenkante des Sensorelements (10).

8. Sensorelement nach einem der Ansprüche 5 bis 7, **dadurch gekennzeichnet, dass** der Flächenschwerpunkt des ersten Lochs (41') in axialer Richtung (201) von der ersten, zweiten, dritten und/oder vierten Kontaktfläche (31, 32, 33, 34) nicht mehr beabstandet ist als der halbe Durchmesser (D) des ersten Lochs (41').

9. Sensorelement nach einem der Ansprüche 5 bis 8, **dadurch gekennzeichnet, dass** die erste Kontaktfläche (31) in Aufsicht auf die Großfläche (104) des Sensorelements (10) zur ersten Durchkontaktierung (41) hin eine konkave Außenkontur (31k) aufweist.

10. Sensorelement nach Anspruch 9, **dadurch gekennzeichnet, dass** die konkave Außenkontur (31k) einen Radius aufweist, der gleich dem halben Durchmesser (D) des ersten Lochs (41') ist.

11. Sensorelement nach einem der vorangehenden Ansprüche, **dadurch gekennzeichnet, dass** zwischen der ersten und der zweiten Festelektrolytschicht (21, 22) eine Isolationsschicht (23, 24) angeordnet ist oder mehrere Isolationsschichten (23, 34) angeordnet sind, sodass ein erster elektrischer Verbund, der die zweite Elektrode (62), die zweite Leiterbahn (52) und die erste Durchkontaktierung (41) umfasst, durch die Isolationsschicht/ Isolationsschichten (23, 34) elektrisch isoliert ist gegenüber einem zweiten elektrischen Verbund, der die Widerstandsheizerbahn (63), die dritte Leiterbahn (53), die vierte Leiterbahn (54), die zweite Durchkontaktierung (42) und die dritte Durchkontaktierung (43) umfasst.

12. Sensorelement nach Anspruch 11, **dadurch gekennzeichnet, dass** die Isolationsschicht/ die Isolationsschichten (23, 24) in Aufsicht auf die Großflächen (104) des Sensorelements lediglich soweit erstreckt ist/ sind, um den ersten elektrischen Verbund gegenüber dem zweiten elektrischen Verbund zu isolieren und im Übrigen von einem Dichtrahmen (23', 24')/jeweils einem Dichtrahmen (23', 24') aus Festelektrolytmaterial umgeben ist/ sind.

13. Sensorelement nach Anspruch 12, **dadurch gekennzeichnet, dass** die Erstreckung des Dichtrahmens (23', 24')/ aller Dichtrahmen (23', 24') in Querrichtung (203), gemessen von der zugehörigen Isolationsschicht (23, 24) bis zur Außenkante des Sensorelements (10) in dem vom Abgas abgewandten Endbereich (102) des Sensorelements stets größer ist als 1/10 der Erstreckung des Sensorelements (10) in Querrichtung (203).

14. Sensorelement nach einem der Ansprüche 11 bis 13, **dadurch gekennzeichnet, dass** eine erste Isolationsschicht (23) vorgesehen ist und eine zweite Isolationsschicht (24) vorgesehen ist, wobei die erste Isolationsschicht (23) in Schichtrichtung (202) von der zweiten Isolationsschicht (24) aus gesehen auf der zur ersten Festelektrolytschicht (21) und zum ersten elektrischen Verbund weisenden Seite liegt und die zweite Isolationsschicht (24) in Schichtrichtung (202) von der ersten Isolationsschicht (23) aus gesehen auf der zur zweiten Festelektrolytschicht (22) und zum zweiten elektrischen Verbund hin weisenden Seite liegt.

15. Sensorelement nach Anspruch 14, **dadurch gekennzeichnet, dass** die erste Isolationsschicht (23) in Aufsicht auf die Großfläche (204) des Sensorelements die zweite Leiterbahn (52) sowie die erste, die zweite und die dritte Durchkontaktierung (41, 42, 43) überdeckt, wobei die erste Isolationsschicht (23) hierzu auf der axialen Höhe der zweiten und der dritten Durchkontaktierung (42, 43) in Querrichtung (203) verbreitert ist.

16. Sensorelement nach Anspruch 14 oder 15, **dadurch gekennzeichnet, dass** die zweite Isolationsschicht (24) in Aufsicht auf die Großfläche (104) des Sensorelements (10) den zweiten elektrischen Verbund umhüllt und zusätzlich die erste Durchkontaktierung (41) überdeckt, indem die zweite Isolationsschicht (24) auf der axialen Höhe der ersten Durchkontaktierung (41) in Querrichtung (202) verjüngt ist.

## Claims

1. Ceramic planar sensor element (10), for example for a lambda probe, wherein the sensor element (10) has an axial end region (101) facing the exhaust gas and, axially opposite, has an end region (102) facing away from the exhaust gas, wherein the sensor element (10) has a parallelepipedal basic shape with two smallest side faces (103) and two largest side faces (104), wherein the smallest side faces (103) are oriented perpendicularly to the axial direction (201), wherein the largest side faces (104) are oriented perpendicularly to a layer direction (202), wherein a transverse direction (203) is oriented perpendicularly to the axial direction (201) and perpendicularly to the layer direction (202), wherein the ceramic sensor element (10) has ceramic layers (21, 22, 23, 24) arranged one above another in the layer direction (202), wherein the ceramic layers (21, 22, 23, 24) comprise at least one first and one second solid electrolyte layer (21, 22), wherein the ceramic sensor element (20) has, in the axial end region (101) facing the exhaust gas, a first electrode (61) exposed to the exhaust gas, wherein the ceramic sensor element (10) has, in the axial end region (101) facing the exhaust gas, in its interior, a second electrode (62) separated from the exhaust gas, wherein the first electrode (61) together with the second electrode (62) and together with the first solid electrolyte layer (21) forms an electrochemical cell, wherein an electrical resistive heater track (63) having a first end (63a) and a second end (63o) is arranged in the interior of the ceramic sensor element (10), in the axial end region (101) facing the exhaust gas, wherein in each case exactly two contact pads (31, 32, 33, 34) for electrically contacting the sensor element (10) from outside are arranged on each of the two largest side faces (104) in the axial end region (101) facing away from the exhaust gas, wherein a first contact pad (31) of said contact pads (31, 32, 33, 34) is connected to the first electrode (61) by way of a first conductor track (51), wherein a second contact pad (32) of said contact pads (31, 32, 33, 34) is connected to the second electrode (62) by way of a first via (41) through the first solid electrolyte layer (21) and by way of a second conductor track (52) arranged in the interior of the sensor element (10), wherein a third contact pad (33) of said contact pads (31, 32, 33, 34) is connected to the first end (63a) of the resistive heater track (63) by way of a second via (42) through the second solid electrolyte layer (22) and by way of a third conductor track (53) arranged in the interior of the sensor element (10), wherein a fourth contact pad (34) of said contact pads (31, 32, 33, 34) is connected to the second end (63o) of the resistive heater track (63) by way of a third via (43) through the second solid electrolyte layer (22) and by way of a fourth conductor track (54) arranged in the interior of the sensor element (10), **characterized in that** the second via (42) and the third via (43) are both arranged on the exhaust gas side of the first via (41) in the axial direction (201), and **in that** the first via (41) is arranged between the second via (42) and the third via (43) in the transverse direction (203).

2. Sensor element according to Claim 1, **characterized in that** the first via (41), the second via (42) and the third via (43) are arranged completely in the end region (102) of the sensor element (10) facing away from the exhaust gas, wherein an extent of the end region (102) of the sensor element (10) facing away from the exhaust gas in the axial direction is less than one fifth of the extent of the sensor element (10) in the axial direction (201) .

3. Sensor element according to Claim 1 or 2, **characterized in that** the second via (42) and the third via (43) are arranged at the same axial level, and **in that** the first via (41) is arranged centrally between the second via (42) and the third via (43) in the transverse direction (203), such that the first, second and third vias (41, 42, 43) lie on the corner points of an isosceles triangle.

4. Sensor element according to Claim 3, **characterized in that** in the isosceles triangle the angle (41) opposite the base (42, 43) is not greater than 90° and is not less than 30°.

5. Sensor element according to any of the preceding claims, **characterized in that** the first via (41) is configured as a first hole (41') in the first solid electrolyte layer (21) with a first electrically conductive material (41") arranged in the first hole (41'), and the second via (42) is configured as a second hole (42') in the second solid electrolyte layer (22) with a second electrically conductive material (42") arranged in the second hole (42'), and the third via (43) is configured as a third hole (43') in the second solid electrolyte layer (22) with a third electrically conductive material (43") arranged in the third hole (43'), and the first hole (41') has a first diameter (D) and the second hole (42') has a second diameter (D), and the third hole (43') has a third diameter (D), and, in a plan view of the large faces (204) of the sensor element (10), the area centroid of the second hole (42') is spaced apart from the area centroid of the third hole (43') by a distance dimension (a).

6. Sensor element according to Claim 5, **characterized in that** the distance dimension (a) is less than the sum of the second diameter (D) and the third diameter (D).

7. Sensor element according to Claim 5 or 6, **characterized in that** half the distance dimension (a) is less than the distance between the area centroid of the second hole (42') and a closest outer edge of the sensor element (10) in the transverse direction, and **in that** half the distance dimension (a) is less than the distance between the area centroid of the third hole (43') and the closest outer edge of the sensor element (10) in the transverse direction.

8. Sensor element according to any of Claims 5 to 7, **characterized in that** the area centroid of the first hole (41') is spaced apart from the first, second, third and/or fourth contact pad (31, 32, 33, 34) in the axial direction (201) by not more than half the diameter (D) of the first hole (41').

9. Sensor element according to any of Claims 5 to 8, **characterized in that**, in a plan view of the large face (104) of the sensor element (10), the first contact pad (31) has a concave outer contour (31k) towards the first via (41).

10. Sensor element according to Claim 9, **characterized in that** the concave outer contour (31k) has a radius equal to half the diameter (D) of the first hole (41').

11. Sensor element according to any of the preceding claims, **characterized in that** one insulation layer (23, 24) or a plurality of insulation layers (23, 34) is/are arranged between the first and second solid electrolyte layers (21, 22), such that a first electrical assemblage comprising the second electrode (62), the second conductor track (52) and the first via (41) is electrically insulated, by the insulation layer/insulation layers (23, 34), from a second electrical assemblage comprising the resistive heater track (63), the third conductor track (53), the fourth conductor track (54), the second via (42) and the third via (43).

12. Sensor element according to Claim 11, **characterized in that**, in a plan view of the large faces (104) of the sensor element, the insulation layer/insulation layers (23, 24) has/have only an extent needed to insulate the first electrical assemblage from the second electrical assemblage and moreover is/are surrounded by a sealing frame (23', 24')/respective sealing frames (23', 24') composed of solid electrolyte material.

13. Sensor element according to Claim 12, **characterized in that** the extent of the sealing frame (23', 24')/all the sealing frames (23', 24') in the transverse direction (203) measured from the associated insulation layer (23, 24) as far as the outer edge of the sensor element (10) in the end region (102) of the sensor element facing away from the exhaust gas is always greater than 1/10 of the extent of the sensor element (10) in the transverse direction (203).

14. Sensor element according to any of Claims 11 to 13, **characterized in that** a first insulation layer (23) is provided and a second insulation layer (24) is provided, wherein the first insulation layer (23) lies on the side facing the first solid electrolyte layer (21) and the first electrical assemblage, as viewed from the second insulation layer (24) in the layer direction (202), and the second insulation layer (24) lies on the side facing the second solid electrolyte layer (22) and the second electrical assemblage, as viewed from the first insulation layer (23) in the layer direction (202).

15. Sensor element according to Claim 14, **characterized in that**, in a plan view of the large face (204) of the sensor element, the first insulation layer (23) covers the second conductor track (52) and also the first, second and third vias (41, 42, 43), wherein the first insulation layer (23) is widened in the transverse direction (203) at the axial level of the second and third vias (42, 43) for this purpose.

16. Sensor element according to Claim 14 or 15, **characterized in that**, in a plan view of the large face (104) of the sensor element (10), the second insulation layer (24) encloses the second electrical assemblage and additionally covers the first via (41) by virtue of the second insulation layer (24) being tapered in the transverse direction (202) at the axial level of the first via (41).

## Revendications

1. Élément capteur planaire céramique (10), par exemple destiné à une sonde lambda, l'élément capteur (10) comportant une zone d'extrémité axiale (101) tournée vers le gaz d'échappement et, axialement opposée, une zone d'extrémité (102) tournée à l'opposé du gaz d'échappement, l'élément capteur (10) présentant une forme de base parallélépipédique qui possède deux surfaces latérales les plus petites (103), deux surfaces latérales les plus grandes (104), les surfaces latérales les plus petites (103) étant orientées perpendiculairement à la direction axiale (201), les surfaces latérales les plus grandes (104) étant orientées perpendiculairement à une direction des couches (202), une direction transversale (203) étant orientée perpendiculairement à la direction axiale (201) et perpendiculairement à la direction des couches (202), l'élément capteur céramique (10) comportant des couches céramiques (21, 22, 23, 24) qui sont disposées les unes au-dessus des autres dans la direction des couches (202), les couches céramiques (21, 22, 23, 24) comprenant au moins une première et une deuxième couche d'électrolyte solide (21, 22),
l'élément capteur céramique (20) comportant, dans la zone d'extrémité axiale (101) tournée vers le gaz d'échappement, une première électrode (61) exposée au gaz d'échappement,
l'élément capteur céramique (10) comportant dans la zone d'extrémité axiale (101) tournée vers le gaz d'échappement, à l'intérieur de celle-ci, une deuxième électrode (62) séparée du gaz d'échappement,
la première électrode (61) formant une cellule électrochimique avec la deuxième électrode (62) et avec la première couche d'électrolyte solide (21),
une piste chauffante résistive électrique (63) ayant une première extrémité (63a) et une deuxième extrémité (63o) étant disposée à l'intérieur de l'élément capteur céramique (10) dans la zone d'extrémité axiale (101) tournée vers le gaz d'échappement, exactement deux surfaces de contact (31, 32, 33, 34) étant respectivement disposées dans la zone d'extrémité axiale (101) tournée à l'opposé du gaz d'échappement, sur chacune des deux surfaces latérales les plus grandes (104), pour la mise en contact électrique de l'élément capteur (10) depuis l'extérieur, une première surface de contact (31), parmi lesdites surfaces de contact (31, 32, 33, 34), étant reliée à la première électrode (61) par l'intermédiaire d'une première piste conductrice (51), une deuxième surface de contact (32), parmi lesdites surfaces de contact (31, 32, 33, 34), étant reliée à la deuxième électrode (62) par l'intermédiaire d'un premier trou d'interconnexion (41) à travers la première couche d'électrolyte solide (21) et par l'intermédiaire d'une deuxième piste conductrice (52), qui est disposée à l'intérieur de l'élément capteur (10), une troisième surface de contact (33), parmi lesdites surfaces de contact (31, 32, 33, 34), étant reliée à la première extrémité (63a) de la piste chauffante résistive (63) par l'intermédiaire d'un deuxième trou d'interconnexion (42) à travers la deuxième couche d'électrolyte solide (22) et par l'intermédiaire d'une troisième piste conductrice (53) qui est disposée à l'intérieur de l'élément capteur (10), une quatrième surface de contact (34), parmi lesdites surfaces de contact (31, 32, 33, 34), étant reliée à la deuxième extrémité (63o) de la piste chauffante résistive (63) par l'intermédiaire d'un troisième trou d'interconnexion (43) à travers la deuxième couche d'électrolyte solide (22) et par l'intermédiaire d'une quatrième piste conductrice (54) qui est disposée à l'intérieur de l'élément capteur (10), **caractérisé en ce que** le deuxième trou d'interconnexion (42) et le troisième trou d'interconnexion (43) sont tous deux disposés dans la direction axiale (201) côté gaz d'échappement du premier trou d'interconnexion (41) et **en ce que** le premier trou d'interconnexion (41) est disposé dans la direction transversale (203) entre le deuxième trou d'interconnexion (42) et le troisième trou d'interconnexion (43).

2. Élément capteur selon la revendication 1, **caractérisé en ce que** le premier trou d'interconnexion (41), le deuxième trou d'interconnexion (42) et le troisième trou d'interconnexion (43) sont entièrement disposés dans la zone d'extrémité (102) de l'élément capteur (10) tournée à l'opposé du gaz d'échappement, la zone d'extrémité (102) de l'élément capteur (10) tournée à l'opposé du gaz d'échappement s'étendant dans la direction axiale sur moins d'un cinquième de l'étendue de l'élément capteur (10) dans la direction axiale (201).

3. Élément capteur selon la revendication 1 ou 2, **caractérisé en ce que** le deuxième trou d'interconnexion (42) et le troisième trou d'interconnexion (43) sont disposés à la même hauteur axiale et **en ce que** le premier trou d'interconnexion (41) est disposé au milieu, dans la direction transversale (203), entre le deuxième trou d'interconnexion (42) et le troisième trou d'interconnexion (43), de telle sorte que les premier, deuxième et troisième trous d'interconnexion (41, 42, 43) se trouvent sur les sommets d'un triangle isocèle.

4. Élément capteur selon la revendication 3, **caractérisé en ce que**, dans le triangle isocèle, l'angle (41) opposé à la base (42, 43) n'est pas supérieur à 90° et n'est pas inférieur à 30°.

5. Élément capteur selon l'une quelconque des revendications précédentes, **caractérisé en ce que** le premier trou d'interconnexion (41) est réalisé sous la forme d'un premier trou (41') dans la première couche d'électrolyte solide (21) avec un premier matériau électriquement conducteur (41") disposé dans le premier trou (41'), et le deuxième trou d'interconnexion (42) est réalisé sous la forme d'un deuxième trou (42') dans la deuxième couche d'électrolyte solide (22) avec un deuxième matériau électriquement conducteur (42") disposé dans le deuxième trou (42'), et le troisième trou d'interconnexion (43) est réalisé sous la forme d'un troisième trou (43') dans la deuxième couche d'électrolyte solide (22) avec un troisième matériau électriquement conducteur (43") disposé dans le troisième trou (43'), et le premier trou (41') présente un premier diamètre (D) et le deuxième trou (42') présente un deuxième diamètre (D) et le troisième trou (43') présente un troisième diamètre (D), et
lorsque les grandes surfaces (204) de l'élément capteur (10) sont vues de dessus, le barycentre de surface du deuxième trou (42') est espacé du barycentre de surface du troisième trou (43') d'une valeur d'espacement (a).

6. Élément capteur selon la revendication 5, **caractérisé en ce que** la valeur d'espacement (a) est inférieure à la somme du deuxième diamètre (D) et du troisième diamètre (D).

7. Élément capteur selon la revendication 5 ou 6, **caractérisé en ce que** la moitié de la valeur d'espacement (a) est inférieure à la distance entre le barycentre de surface du deuxième trou (42') et un bord extérieur de l'élément capteur (10) le plus proche dans la direction transversale, et **en ce que** la moitié de la valeur d'espacement (a) est inférieure à la distance entre le barycentre de surface du troisième trou (43') et le bord extérieur de l'élément capteur (10) le plus proche dans la direction transversale.

8. Élément capteur selon l'une quelconque des revendications 5 à 7, **caractérisé en ce que** le barycentre de surface du premier trou (41') n'est pas espacé, dans la direction axiale (201), des première, deuxième, troisième et/ou quatrième surfaces de contact (31, 32, 33, 34) de plus de la moitié du diamètre (D) du premier trou (41').

9. Élément capteur selon l'une quelconque des revendications 5 à 8, **caractérisé en ce que** la première surface de contact (31) présente un contour extérieur concave (31k) lorsque la grande surface (104) de l'élément capteur (10) est vue de dessus vers le premier trou d'interconnexion (41).

10. Élément capteur selon la revendication 9, **caractérisé en ce que** le contour extérieur concave (31k) présente un rayon égal à la moitié du diamètre (D) du premier trou (41').

11. Élément capteur selon l'une quelconque des revendications précédentes, **caractérisé en ce qu'**une couche d'isolation (23, 24) ou plusieurs couches d'isolation (23, 34) est ou sont disposées entre la première et la deuxième couche d'électrolyte solide (21, 22), de telle sorte qu'un premier ensemble électrique, qui comprend la deuxième électrode (62), la deuxième piste conductrice (52) et le premier trou d'interconnexion (41), soit isolé électriquement par la couche ou les couches d'isolation (23, 34) par rapport à un deuxième ensemble électrique, qui comprend la piste chauffante résistive (63), la troisième piste conductrice (53), la quatrième piste conductrice (54), le deuxième trou d'interconnexion (42) et le troisième trou d'interconnexion (43).

12. Élément capteur selon la revendication 11, **caractérisé en ce que** la couche ou les couches d'isolation (23, 24) s'étend ou s'étendent, lorsque les grandes surfaces (104) de l'élément capteur sont vues de dessus, uniquement jusqu'à isoler le premier ensemble électrique du deuxième ensemble électrique et est ou sont par ailleurs entourées d'un cadre d'étanchéité (23', 24')/ respectivement d'un cadre d'étanchéité (23', 24') en matériau d'électrolyte solide.

13. Élément capteur selon la revendication 12, **caractérisé en ce que** l'étendue du cadre d'étanchéité (23', 24')/de tous les cadres d'étanchéité (23', 24') dans la direction transversale (203), mesurée depuis la couche d'isolation (23, 24) correspondante jusqu'au bord extérieur de l'élément capteur (10) dans la zone d'extrémité (102) de l'élément capteur qui est tournée à l'opposé du gaz d'échappement, est toujours supérieure à 1/10 de l'étendue de l'élément capteur (10) dans la direction transversale (203).

14. Élément capteur selon l'une quelconque des revendications 11 à 13, **caractérisé en ce qu'**il est prévu une première couche d'isolation (23) et **en ce qu'**il est prévu une deuxième couche d'isolation (24), la première couche d'isolation (23) se trouvant, lorsqu'elle est vue dans la direction des couches (202) depuis la deuxième couche d'isolation (24), sur le côté orienté vers la première couche d'électrolyte solide (21) et vers le premier ensemble électrique, et la deuxième couche d'isolation (24) se trouvant, lorsqu'elle est vue dans la direction des couches (202) depuis la première couche d'isolation (23), sur le côté orienté vers la deuxième couche d'électrolyte solide (22) et vers le deuxième ensemble électrique.

15. Élément capteur selon la revendication 14, **caractérisé en ce que** la première couche d'isolation (23) recouvre, lorsque la grande surface (204) de l'élément capteur est vue de dessus, la deuxième piste conductrice (52) et les premier, deuxième et troisième trous d'interconnexion (41, 42, 43), la première couche d'isolation (23) s'élargissant à cet effet dans la direction transversale (203) sur la hauteur axiale des deuxième et troisième trous d'interconnexion (42, 43).

16. Élément capteur selon la revendication 14 ou 15, **caractérisé en ce que** la deuxième couche d'isolation (24), lorsque la grande surface (104) de l'élément capteur (10) est vue de dessus, enveloppe la deuxième liaison électrique et recouvre en outre le premier trou d'interconnexion (41), par le fait que la deuxième couche d'isolation (24) se rétrécit sur la hauteur axiale du premier trou d'interconnexion (41) dans la direction transversale (202).
